# EUROPÄISCHE PATENTSCHRIFT

(11) **EP 0 303 978 B1**
(45) Veröffentlichungstag und Bekanntmachung des Hinweises auf die Patenterteilung: **30.11.1994**
(21) Anmeldenummer: 88113105.6
(22) Anmeldetag: 12.08.1988
(51) Int. Cl.: H04N 7/133

(54) **Verfahren und Schaltungsanordnung zur Verbesserung der Auflösung von digitalen Signalen**
Method and circuit for enhancing the resolution of digital signals
Procédé et circuit pour augmenter la résolution de signaux numériques

(30) Priorität: 21.08.1987 DE 3727874
(43) Veröffentlichungstag der Anmeldung: 22.02.1989
(73) Patentinhaber: Deutsche Thomson-Brandt GmbH, 78003 Villingen-Schwenningen (DE)
(72) Erfinder: Hartnack, Wolfgang, Dipl.-Ing., D-3005 Hemmingen 1 (DE); Schütze, Herbert, Dipl.-Ing., D-3000 Hannover 81 (DE)

(56) Entgegenhaltungen:
- GB-A- 2 125 255
- US-A- 4 189 748
- US-A- 4 394 774
- PATENT ABSTRACTS OF JAPAN, Band 9, Nr. 185 (E-332)[1908], 31. Juli 1985;& JP-A-60 54 537 (SONY K.K.) 29-03-1985

## Beschreibung

Die Erfindung betrifft ein Verfahren und eine Schaltungsanordnung zur Verbesserung der Auflösung von digitalen Signalen nach dem Oberbegriff der Ansprüche 1, 4 und 5.

Um bei der digitalen Übertragung von Fernseh-Signalen den Datenumfang zu reduzieren, ist es bekannt, die Fernseh-Signale vom Originalbereich blockweise zunächst in einen Frequenzbereich zu transformieren, von den aufgrund der Transformation erhaltenen Spektralkoeffizienten nur die wesentlichen Koeffizienten zu übertragen und die unwesentlichen zu Null zu setzen und anschließend die transformierten Werte wieder in den Originalbereich zurückzutransformieren. Die Transformation erfolgt durch Multiplikation der Signalwerte mit einer Transformationsfunktion, wobei die Stellenzahl infolge der Transformation zunimmt. Um die Stellenzahl auf den für eine ausreichende Auflösung der Abstufungen der Luminanz- und/oder Chrominanz-Signalwerte festgelegten Wert, z.B. 8 Bit plus Vorzeichen zu reduzieren, wird z.B. bei einer zweidimensionalen Transformation der Blockgröße 8*8 eine zweimalige Integer-Division der Koeffizientenblöcke durch acht und damit eine Rundung der Transformationswerte vorgenommen. Es hat sich jedoch gezeigt, daß bei kleinen Wechselanteilen der transformierten Koeffizienten, d.h. bei sanften Strukturen im Originalbild, gröbere Strukturen nach der Rücktransformation auftreten. Dies liegt daran, daß durch die Rundung der transformierten Werte Informationen verlorengehen, die bei der Rücktransformation fehlen und aufgrund nicht vorhandenen Maskierung durch höherfrequente Signalanteile störend sichtbar werden.

In US-A-4 394 774 werden alle Koeffizienten eines Blocks in Abhängigkeit von dem Füllstand eines Pufferspeichers normalisiert und anschließend quantisiert, um einen Over- oder Underflow des Pufferspeichers zu vermeiden. Bei der Quantisierung werden unabhängig von Bildstrukturen alle Koeffizienten unterdrückt, die eine Schwelle unterschreiten. Aufgrund von Rundungen bei der DCT-Transformation und noch verstärkt durch die Quantisierung werden kleine, aber für einen gleichmäßigen Bildeindruck notwendige Koeffizienten nicht verwertet.

In GB-A-2 125 255 erhält jeder Block von Audio-Datenworten einen Skalenfaktor, der angibt, mit welcher Gesamt-Stellenzahl jedes Datenwort zu interpretieren ist. Da es sich jedoch nicht um (DCT-)transformierte Werte handelt, treten keine entsprechenden Gleich- und Wechselanteil-Koeffizienten auf und es werden alle Datenworte eines Blocks in der gleichen Weise behandelt.

Der Erfindung liegt die Aufgabe zugrunde, trotz Begrenzung der Stellenzahl im Frequenzbereich eine bessere Reproduktion von kleinen, durch Frequenzbereich-Wechselanteile repräsentierte Signalveränderungen im Originalbereich nach der Rücktransformation zu erhalten.

Diese Aufgabe wird durch das Verfahren nach Anspruch 1 und durch eine Schaltungsanordnung nach den Ansprüchen 4 und 5 gelöst.

Bei der Erfindung werden die Werte großer Koeffizienten unverändert, d.h. z.B. durch acht geteilt übertragen und die Werte kleiner Koeffizienten, die noch für den Bildeindruck wesentlich sind, also nicht zu Null gesetzt werden, mit einer höheren Genauigkeit übertragen. Dies geschieht dadurch, daß die zur Verfügung stehende Stellenzahl besser ausgenutzt wird, indem die Werte kleiner Koeffizienten nicht in gleicher Weise wie die Werte großer Koeffizienten durch acht sondern durch eine kleinere Zahl geteilt und damit relativ vergrößert werden. Somit wird von den bei der Übertragung zur Verfügung stehenden Stellen wenigstens eine weitere Stelle belegt. Diese Vergrößerung wird anschließend bei der Rücktransformation berücksichtigt.

Weiterbildungen und vorteilhafte Ausführungsformen der Erfindung ergeben sich aus den weiteren Ansprüchen, der Beschreibung und der Zeichnung, anhand der ein Ausführungsbeispiel der Erfindung nachfolgend erläutert wird.

In der Zeichnung zeigen:
- Fig 1a: eine Tabelle von Luminanz-Signalwerten, die transformiert, gerundet und rücktransformiert sind ohne die erfindungsgemäßen Maßnahmen;
- Fig 1b: die gleichen Basiswerte wie in Fig. 1a, jedoch nach Durchführung der erfindungsgemäßen Maßnahmen;
- Fig. 2: eine Schaltungsanordnung zur Durchführung einer Quantisierung nach der Transformation und
- Fig 3: eine Schaltungsanordnung zu Dequantisierung vor der Rücktransformation.

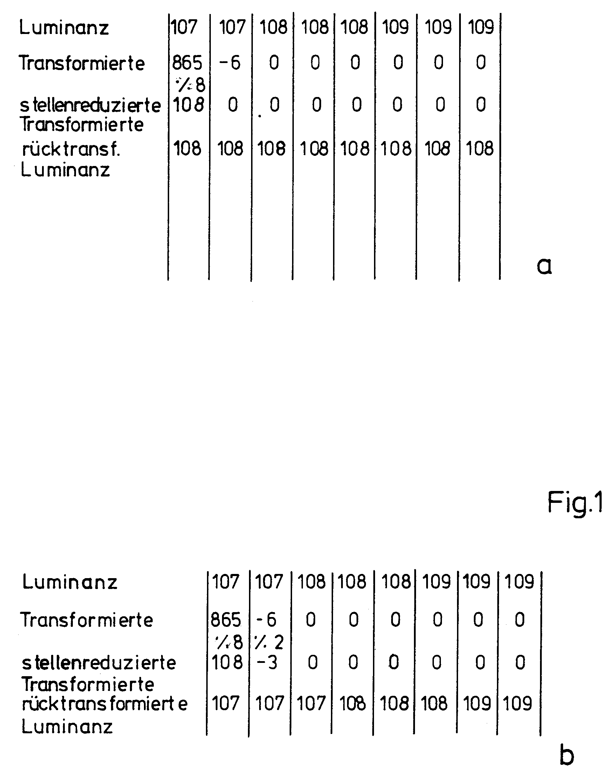

In der in Fig. 1 dargestellten Tabelle sind Luminanzwerte der ersten acht Pixel einer 8 x 8 Matrix, in die ein Fernsehbild zerlegt ist, aufgetragen. Die Luminanzwerte wachsen allmählich von links nach rechts an. Im Originalbereich ist dies als sog. Graukeil erkennbar. Bei Transformation mittels Diskreter-Cosinus-Transformation ergeben sich die in der zweiten Zeile angegebenen Werte, wobei der erste Koeffizient den Gleichanteil und die folgenden Koeffizienten die Wechselanteile darstellen. Nach Rundung, in diesem Falle nach Division durch 8, angegeben in der dritten Zeile in Fig. 1a, verschwindet der zweite Koeffizient, sodaß nach Rücktransformation nur ein konstanter Luminanzwert errechnet wird. Dieser ist in der vierten Zeile angegeben. Setzt sich der Graukeil über die sich rechts anschließenden Blöcke fort, so werden im reproduzierten Bild Treppenstrukturen sichtbar.

In Fig. 1b sind die Koeffizienten der Wechselanteile vergrößert, sodaß der zweite Koeffizient trotz Rundung auf eine kleinere Stellenzahl nicht zu Null wird. Die Rücktransformation zeigt, daß nunmehr unterschiedliche Luminanzwerte darstellbar sind, die dem Original wesentlich näher kommen. Werden nur die kleinen Koeffizienten vergrößert und die großen Koeffizienten beibehalten, so kann die Bildauflösung gesteigert werden, ohne daß die insgesamt zu übertragende Stellenzahl der Datenworte und damit die Datenmenge erhöht werden muß.

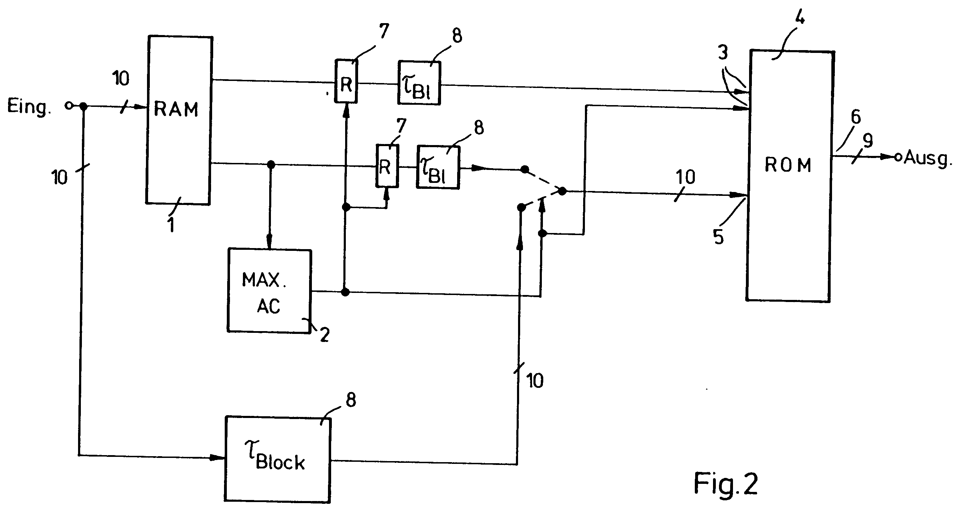

Fig. 2 zeigt eine Schaltungsanordnung zur unterschiedlichen Quantisierung der Koeffizienten. Die transformierten Werte der Luminanzsignale, z.B. Blöcke mit 8 x 8 oder 2 x 4 x 8 Pixels, gelangen als neunstellige Binär-Datenworte mit einem zusätzlichen Vorzeichenbit zu einer Speicherschaltung 1. Dort werden alle bei der Blockgröße auftretenden vierundsechzig Koeffizienten gespeichert. Von den Koeffizienten wird nun in einer Maximalwert-Erkennungsschaltung 2, die z.B. als Zähler ausgebildet sein kann, der Maximalwert der Wechselanteile beinhaltenden Koeffizienten ermittelt. Dieser Wert gelangt dann nach Zwischenspeicherung zu Adresseingängen 3 eines als Divisionsschaltung dienenden Speichers 4 und bildet einen Divisor für die relative Vergrößerung kleiner Koeffizienten. Danach gelangen unter Zeitverzögerung alle Koeffizienten des Blockes, dessen Maximalwert zuvor ermittelt wurde, als neunstellige Binär-Worte plus Vorzeichenbit an die Adresseingänge 5 des Speichers 4. Wahrend die den Gleichanteil und den maximalen Wechselanteil enthaltenden Koeffizienten unverändert gelassen werden, wird anhand einer im Speicher 4 gespeicherten Divisionstabelle eine relative Vergrößerung der übrigen Koeffizienten vorgenommen. Der Vergrößerungsfaktor gegenüber dem Standarddivisor von vierundsechzig kann dabei in Abhängigkeit des als Bezugswert dienenden maximalen Wechselanteils und der Größe der übrigen Koeffizienten zwischen zwei und vierundsechzig betragen.

Am Ausgang 6 des Speichers 4 sind die achtstelligen Datenworte plus Vorzeichenbit abgreifbar, bei welchen die Koeffizienten mit geringen Wechselanteilen mit einer höheren Auflösung quantisiert, das heißt vergrößert enthalten sind. Die erwähnte Zwischenspeicherung und Zeitverzögerung wird in dafür vorgesehenen Zwischenspeichern 7 und Verzögerungsschaltungen 8 vorgenommen.

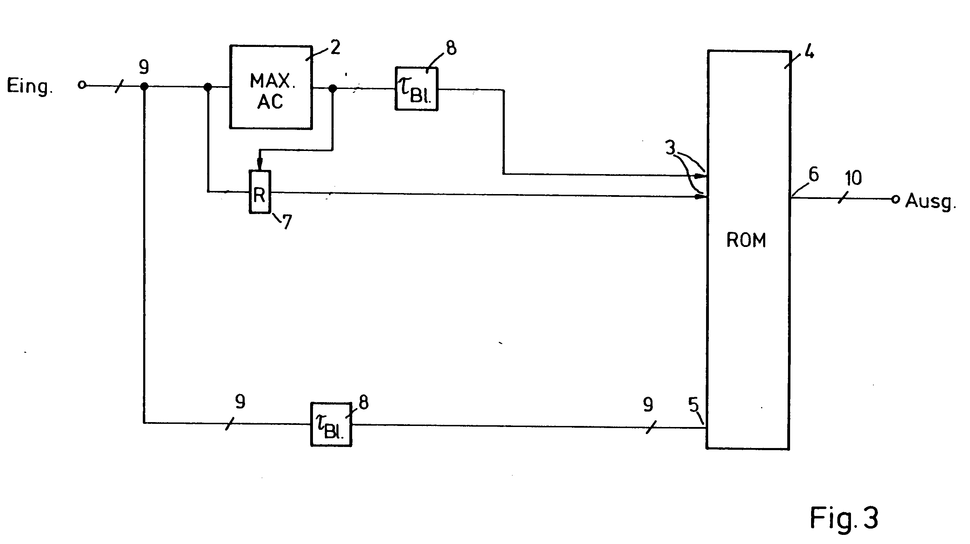

Vor der Rücktransformation wird der in der Schaltung nach Fig. 2 durchgeführte Quantisierung wieder rückgängig gemacht. Dazu dient die in Fig. 3 dargestellte Schaltung, welche im Prinzip derjenigen in Fig. 2 entspricht, bei der jedoch die Multiplikationstabelle im Speicher 4 die reziproken Werte derjenigen aus dem Speicher 4 in Fig. 1 enthält. Dabei wird auch wieder die Stellenzahl der Datenworte erhöht. So-mit entstehen aus den achtstelligen Datenworten wieder Datenworte mit neun Stellen plus Vorzeichenbit, die bei der folgenden Rücktransformation aus dem Frequenzbereich in den Originalbereich zu der angestrebten besseren Reproduktion der Fernseh-Signale führen.

## Patentansprüche

1. Verfahren zur Verbesserung der Auflösung von digitalen Signalen, insbesondere Luminanz- und/oder Chrominanz-Fernseh-Signalen, deren Abtastwerte - z.B. durch diskrete Cosinus-Transformation - blockweise transformiert und rücktransformiert werden, wobei für jeden Block ein einen Gleichanteil darstellender Koeffizient und mehrere Wechselanteile darstellende Koeffizienten entstehen und bei der Berechnung der Koeffizienten die eigentlich erforderliche Stellenzahl der Datenworte begrenzt wird, **gekennzeichnet** durch folgende Schritte bei der Transformation:
- der Gleichanteil wird in der Stellenzahl begrenzt;
- wenn der maximale Wechselanteil des Blocks eine festgelegte Stellenzahl nicht unterschreitet (2), werden die Wechselanteile des Blocks entsprechend der Stellenzahlbegrenzung des Gleichanteils in ihrer Stellenzahl begrenzt, wenn jedoch der maximale Wechselanteil des Blocks eine festgelegte Stellenzahl unterschreitet (2), werden die Wechselanteile des Blocks weniger stark als der Gleichanteil in ihrer Stellenzahl begrenzt (4) und damit bezüglich des Gleichanteils relativ vergrößert,
und durch folgende Schritte bei der Rücktransformation:
- wenn bei der Transformation der maximale Wechselanteil des Blocks eine festgelegte Stellenzahl unterschritten (2) hat, werden die Wechselanteile des Blocks bei der Rücktransformation bezüglich des Gleichanteils entsprechend relativ verkleinert (4) in ihrer Stellenzahl.

2. Verfahren nach Anspruch 1, **dadurch gekennzeichnet**, daß bei der Transformation oder bei der Rücktransformation nur die Wechselanteile außer dem maximalen Wechselanteil in ihrer Stellenzahl entsprechend verarbeitet (4) werden.

3. Verfahren nach Anspruch 1 oder 2, **dadurch gekennzeichnet**, daß die Wechselanteile bei der Transformation relativ um einen Faktor von 2 bis 64 vergrößert und bei der Rücktransformation entsprechend verkleinert (4) werden.

4. Schaltungsanordnung für ein Verfahren nach einem oder mehreren der Ansprüche 1 bis 3 zur Verbesserung der Auflösung von digitalen Signalen, insbesondere Luminanz- und/oder Chrominanz-Fernseh-Signalen, deren Abtastwerte - z.B. durch diskrete Cosinus-Transformation - in einer Transformationsschaltung blockweise transformiert werden, wobei für jeden Block ein einen Gleichanteil darstellender Koeffizient und mehrere Wechselanteile darstellende Koeffizienten entstehen und bei der Berechnung der Koeffizienten die eigentlich erforderliche Stellenzahl der Datenworte begrenzt wird, **gekennzeichnet** durch eine Speicherschaltung (1) für die Datenworte der Koeffizienten und eine mit der Speicherschaltung verbundene Stellenzahl-Erkennungsschaltung (2), die die erforderliche Stellenzahl für den maximalen Wechselanteil des Blocks ermittelt und entsprechend eine Stellenzahl-Veränderungsschaltung (4) steuert, die die Wechselanteile des Blocks weniger stark in ihrer Stellenzahl begrenzt und damit bezüglich des Gleichanteils relativ vergrößert, wenn der maximale Wechselanteil des Blocks eine festgelegte Stellenzahl unterschreitet, und die die Wechselanteile des Blocks entsprechend der Stellenzahlbegrenzung des Gleichanteils in ihrer Stellenzahl begrenzt, wenn der maximale Wechselanteil des Blocks die festgelegte Stellenzahl nicht unterschreitet.

5. Schaltungsanordnung für ein Verfahren nach einem oder mehreren der Ansprüche 1 bis 3 zur Verbesserung der Auflösung von digitalen Signalen, insbesondere Luminanz- und/oder Chrominanz-Fernseh-Signalen, deren transformierte Abtastwerte - z.B. durch diskrete Cosinus-Transformation - in einer Transformationsschaltung blockweise rücktransformiert werden, wobei für jeden Block ein einen Gleichanteil darstellender Koeffizient und mehrere Wechselanteile darstellende Koeffizienten verwendet werden und bei der Berechnung der Koeffizienten die eigentlich erforderliche Stellenzahl der Datenworte begrenzt wurde, **gekennzeichnet** durch eine Stellenzahl-Erkennungsschaltung (2), die die Stellenzahl des maximalen Wechselanteils des Blocks ermittelt und eine Stellenzahl-Veränderungsschaltung (4) steuert, die die Wechselanteile des Blocks bezüglich des Gleichanteils relativ verkleinert in ihrer Stellenzahl, wenn der maximale Wechselanteil des Blocks bei der Transformation eine festgelegte Stellenzahl unterschritten hat, und die anderenfalls die Wechselanteile des Blocks entsprechend der Stellenanzahl für den Gleichanteil in ihrer Stellenzahl verarbeitet.

6. Schaltungsanordnung nach Anspruch 4 oder 5, **dadurch gekennzeichnet**, daß die Stellenzahl-Veränderungsschaltung (4) als Speicher ausgebildet ist, in dessen Speicherplätzen eine über seine Adresseingänge (3) ansteuerbare Divisions- bzw. Multiplikationstabelle enthalten ist.

7. Schaltungsanordnung nach einem oder mehreren der Ansprüche 4 bis 6, **dadurch gekennzeichnet**, daß bei der Transformation und bei der Rücktransformation nur die Wechselanteile außer dem maximalen Wechselanteil in der Stellenzahl-Veränderungsschaltung (4) in ihrer Stellenzahl entsprechend verarbeitet werden.

8. Schaltungsanordnung nach einem oder mehreren der Ansprüche 4 bis 7, **dadurch gekennzeichnet**, daß die Wechselanteile bei der Transformation in der Stellenzahl-Veränderungsschaltung (4) relativ um einen Faktor von 2 bis 64 vergrößert und bei der Rücktransformation entsprechend in der Stellenzahl-Veränderungsschaltung (4) verkleinert werden.

## Claims

1. Method for improving the resolution of digital signals, in particular luminance and/or chrominance television signals whose scanning values are transformed and inversely transformed - e.g. by means of discrete cosine transformation - in blocks, wherein one coefficient representing a dc component and a plurality of coefficients representing ac components are formed for each block and the actually required number of places of the data words is limited during the calculation of the coefficients, characterised by the following steps for the transformation,
- the dc component is limited as regards the number of places;
- if the maximum ac component of the block does not fall below a predetermined number of places (2), the ac components of the block are limited as regards their number of places in accordance with the limit on the number of places of the dc component, but if the maximum ac component of the block does fall below a predetermined number of places (2), the ac components of the block are limited less severely than the dc component as regards the number of their places (4) and are thus relatively expanded with respect to the dc component,
and by the following steps for the inverse transformation:
- if the maximum ac component of the block did fall below a predetermined number of places (2) during the transformation, the ac components of the block are accordingly relatively reduced as regards their number of places (4) with respect to the dc component.

2. Method in accordance with Claim 1, characterised in that, only the ac components other than the maximum ac component are correspondingly processed as regards their number of places (4) during the transformation or during the inverse transformation.

3. Method in accordance with Claim 1 or 2, characterised in that, the ac components are relatively expanded by a factor of 2 to 64 during the transformation and are correspondingly reduced (4) during the inverse transformation.

4. Circuit arrangement for a method in accordance with one or more of the Claims 1 to 3 for improving the resolution of digital signals, in particular luminance and/or chrominance television signals whose scanning values are transformed in blocks in a transformation circuit - e.g. by means of discrete cosine transformation, wherein one coefficient representing a dc component and a plurality of coefficients representing ac components are formed for each block and the actually required number of places of the data words is limited during the calculation of the coefficients, characterised by,
a storage circuit (1) for the data words of the coefficients and a circuit for identifying the number of places (2) connected to the storage circuit, which identifying circuit determines the number of places required for the maximum ac component of the block and accordingly controls a circuit for altering the number of places (4) which limits the ac components of the block as regards their number of places less severely and thus relatively expands them with respect to the dc component if the maximum ac component of the block falls below a predetermined number of places, and, which limits the ac components of the block as regards their number of places in accordance with the limit on the number of places of the dc component if the maximum ac component of the block does not fall below the predetermined number of places.

5. Circuit arrangement for a method in accordance with one or more of the Claims 1 to 3 for improving the resolution of digital signals, in particular luminance and/or chrominance television signals whose transformed scanning values are inversely transformed in blocks in a transformation circuit - e.g. by means of discrete cosine transformation, wherein one coefficient representing a dc component and a plurality of coefficients representing ac components are used for each block and the actually required number of places of the data words was limited during the calculation of the coefficients, characterised by,
a circuit for identifying the number of places (2) which determines the number of places of the maximum ac component of the block and controls a circuit for altering the number of places (4) which relatively reduces the ac components of the block as regards their number of places with respect to the dc component if the maximum ac component of the block has fallen below a predetermined number of places during the transformation and which otherwise processes the ac components of the block as regards their number of places in accordance with the number of places for the dc component.

6. Circuit arrangement in accordance with Claim 4 or 5, characterised in that, the circuit for altering the number of places (4) is constructed as a store in whose storage places there is contained a division or multiplication table that can be controlled via its address inputs (3).

7. Circuit arrangement in accordance with one or more of the Claims 4 to 6, characterised in that, only the ac components other than the maximum ac component are correspondingly processed as regards their number of places in the circuit for altering the number of places (4) during the transformation and during the inverse transformation.

8. Circuit arrangement in accordance with one or more of the Claims 4 to 7, characterised in that, the ac components are relatively expanded by a factor of 2 to 64 in the circuit for altering the number of places (4) during the transformation and are correspondingly reduced in the circuit for altering the number of places (4) during the inverse transformation.

## Revendications

1. Procédé pour améliorer la résolution de signaux numériques, en particulier de signaux de télévision de luminance et/ou de chrominance, dont les valeurs d'échantillonnage sont transformées bloc par bloc - par exemple par transformation à cosinus de valeurs discrètes - et retransformées, un coefficient qui représente une composante continue et plusieurs coefficients qui représentent des composantes alternatives étant formés pour chaque bloc et le nombre de chiffres qui est en fait nécessaire pour les mots de données étant limité lors du calcul des coefficients, **caractérisé** par les étapes suivantes lors de la transformation :
- la composante continue est limitée pour ce qui est du nombre de chiffres ;
- lorsque la composante alternative maximale du bloc ne descend pas au-dessous (1) d'un nombre de chiffres fixé, les composantes alternatives du bloc sont limitées quant à leur nombre de chiffres conformément à la limitation du nombre de chiffres de la composante continue, mais lorsque la composante alternative maximale du bloc descend au-dessous (2) d'un nombre de chiffres fixé, les composantes alternatives du bloc sont moins limitées (4) quant à leur nombre de chiffres que la composante continue et sont donc relativement augmentées par rapport à la composante continue,
et par les étapes suivantes lors de la transformation inverse :
- lorsque, lors de la transformation, la composante alternative maximale du bloc est descendue au-dessous (2) d'un nombre de chiffres fixé, lors de la transformation inverse les composantes alternatives du bloc sont relativement diminuées (4) quant à leur nombre de chiffres par rapport à la composante continue.

2. Procédé selon la revendication 1, **caractérisé en ce** que lors de la transformation ou lors de la transformation inverse seulement les composantes alternatives, à l'exception de la composante alternative maximale, sont traitées (4) de manière correspondante pour ce qui est de leur nombre de chiffres.

3. Procédé selon la revendication 1 ou 2, **caractérisé en ce** que les composantes alternatives sont augmentées relativement d'un facteur de 2 à 64 lors de la transformation et sont diminuées (4) de manière correspondante lors de la transformation inverse.

4. Circuit pour un procédé selon l'une ou plusieurs des revendications 1 à 3 pour améliorer la résolution de signaux numériques, en particulier de signaux de télévision de luminance et/ou de chrominance, dont les valeurs d'échantillonnage sont transformées bloc par bloc - par exemple par transformation à cosinus de valeurs discrètes - et retransformées, un coefficient qui représente une composante continue et plusieurs coefficients qui représentent des composantes alternatives étant formés pour chaque bloc et le nombre de chiffres qui est en fait nécessaire pour les mots de données étant limité lors du calcul des coefficients, **caractérisé** par un circuit de mémoire (1) pour les mots de données des coefficients et un circuit de reconnaissance de nombre de chiffres (2), lié au circuit de mémoire, qui détecte le nombre de chiffres nécessaire pour la composante alternative maximale du bloc et qui commande un circuit de changement de nombre de chiffres (4) de manière correspondante, circuit qui limite moins fortement le nombre de chiffres des composantes alternatives du bloc et qui les augmente donc relativement par rapport à la composante continue, lorsque la composante alternative maximale du bloc descend au-dessous d'un nombre de chiffres fixé et qui limite les composantes alternatives du bloc quant à leur nombre de chiffres conformément à la limitation du nombre de chiffres de la composante continue lorsque la composante alternative maximale du bloc ne descend pas au-dessous du nombre de chiffres fixé.

5. Circuit pour un procédé selon l'une ou plusieurs des revendications 1 à 3 pour améliorer la résolution de signaux numériques, en particulier de signaux de télévision de luminance et/ou de chrominance, dont les valeurs d'échantillonnage transformées sont retransformées bloc par bloc - par exemple par transformation à cosinus de valeurs discrètes - dans un circuit de transformation, un coefficient qui représente une composante continue et des coefficients qui représentent plusieurs composantes alternatives étant utilisés pour chaque bloc et le nombre de chiffres qui est en fait nécessaire pour les mots de données ayant été limité lors du calcul des coefficients, **caractérisé** par un circuit de reconnaissance de nombre de chiffres (2), qui détecte le nombre de chiffres de la composante alternative maximale du bloc et qui commande un circuit de changement de nombre de chiffres (4) qui diminue relativement le nombre de chiffres des composantes alternatives du bloc par rapport à la composante continue lorsque la composante alternative maximale du bloc descend, lors de la transformation, au-dessous d'un nombre de chiffres fixé et qui, sinon, traite le nombre de chiffres des composantes alternatives du bloc conformément au nombre de chiffres pour la composante continue.

6. Circuit selon la revendication 4 ou 5, **caractérisé en ce** que le circuit de changement de nombre de chiffres (4) est configuré comme une mémoire dans les emplacements de mémoire de laquelle est contenu un tableau de division ou bien de multiplication qui peut être commandé par ses entrées d'adresse (3).

7. Circuit selon l'une ou plusieurs des revendications 4 à 6, **caractérisé en ce** que lors de la transformation et lors de la transformation inverse seulement les composantes alternatives, à l'exception de la composante alternative maximale, sont traitées (4) de manière correspondante pour ce qui est de leur nombre de chiffres dans le circuit de changement de nombre de chiffres (4).

8. Circuit selon l'une ou plusieurs des revendications 4 à 7, **caractérisé en ce** que les composantes alternatives sont augmentées relativement d'un facteur de 2 à 64 lors de la transformation dans le circuit de changement de nombre de chiffres (4) et sont diminuées de manière correspondante lors de la transformation inverse dans le circuit de changement de nombre de chiffres (4).
